# EUROPEAN PATENT SPECIFICATION

(11) **EP 3 672 415 B1**
(45) Date of publication and mention of the grant of the patent: **01.05.2024**
(21) Application number: 18768978.1
(22) Date of filing: 21.08.2018
(51) Int. Cl.: A23B 4/12, A23B 4/16, A23B 4/20, A23L 17/40

(54) **PRESERVATION OF BROWN SHRIMP**
KONSERVIERUNG VON BRAUNEN GARNELEN
CONSERVATION DE CREVETTES BRUNES

(30) Priority: 21.08.2017 NL 2019431
(43) Date of publication of application: 01.07.2020
(73) Proprietor: Roem van Yerseke B.V., 4401 KZ Yerseke (NL)
(72) Inventor: VROONLAND, Kees, 4401 KZ Yerseke (NL)
(74) Representative: V.O.
(86) International application number: PCT/NL2018/050549
(87) International publication number: WO 2019/039939

(56) References cited:
- NL-C- 2 002 566
- US-B1- 6 562 390
- HWANHLEM N.: "Application of a nisin Z-producing Lactococcus lactis subsp. lactis KT2W2L isolated from brackish water for biopreservation in cooked , peeled and ionized tropical shrimps during storage at 8°C under modified atmosphere packaging", EUR FOOD RES TECHNOL, vol. 240, 11 February 2015 (2015-02-11), pages 1259-1269, XP009505332,
- SARAOUI TAOUS ET AL: "Improving simultaneously the quality and safety of cooked and peeled shrimp using a cocktail of bioprotective lactic acid bacteria", INTERNATIONAL JOURNAL OF FOOD MICROBIOLOGY, ELSEVIER BV, NL, vol. 241, 3 October 2016 (2016-10-03), pages 69-77, XP029837594, ISSN: 0168-1605, DOI: 10.1016/J.IJFOODMICRO.2016.09.024
- M?NZNER R ED - PASTORE GLÁUCIA MARIA ET AL: "Mikrobiologische Untersuchungen an bestrahlten Garnelen Microbiological studies of irradiated shrimps|", LWT- FOOD SCIENCE AND TECHNO, ACADEMIC PRESS, UNITED KINGDOM, vol. 7, no. 5, 1 January 1974 (1974-01-01) , pages 288-290, XP008113981, ISSN: 0023-6438
- PAPA ABDOULAYE FALL ET AL: "Sensory and physicochemical evolution of tropical cooked peeled shrimp inoculated byandCNCM I-4031 during storage at 8Â°C", INTERNATIONAL JOURNAL OF FOOD MICROBIOLOGY, vol. 152, no. 3, 23 July 2011 (2011-07-23) , pages 82-90, XP028394040, ISSN: 0168-1605, DOI: 10.1016/J.IJFOODMICRO.2011.07.015 [retrieved on 2011-07-23]
- ZHUANG R-Y ET AL: "Quality changes in pre-packaged shrimp and catfish treated with sodium acetate, sodium lactate and propyl gallate during refrigerated storage", JOURNAL OF FOOD SCI, WILEY-BLACKWELL PUBLISHING, INC, US, vol. 61, no. 1, 1 January 1996 (1996-01-01), pages 241-244, XP008113972, ISSN: 0022-1147, DOI: 10.1111/J.1365-2621.1996.TB14769.X
- GOKOGLU N: "The effect of organic acid treatments on the melanosis inhibition and shelf-life in shrimp (Penaeus japonicus)", ACTA ALIMENT, AKADEMIAI KRADO. BUDAPEST, HU, vol. 33, no. 2, 1 January 2004 (2004-01-01), pages 191-199, XP008113973, ISSN: 0139-3006, DOI: 10.1556/AALIM.33.2004.2.11
- SCHEPENS A ET AL: "Lactic acid decontamination and modified atmosphere packaging. Effects on keeping quality of raw Penaeus esculentus", VOEDINGSMIDDELENTECHNOLO, KEESING NOORDERVLIET B.V., ZEIST, NL, vol. 24, no. 13, 1 January 1991 (1991-01-01), pages 13-15, XP008113993, ISSN: 0042-7934

## Description

The invention is directed to a preserved brown shrimp product with a long shelf life, a method for preserving shrimp and a mixture of a shrimp and a preserving solution comprising a lactate and acetate compound.

Brown shrimp is the common name for shrimp of the species *Crangon crangon.* This type of shrimp is caught in and near the North Sea. Before the shrimp is ready for consumption, the shrimp must first be processed, which includes cooking and peeling the brown shrimp.

Brown shrimp is mainly caught in the waters around Belgium, the Netherlands, Germany and Denmark. The shrimp is typically cooked shortly after it is caught, either on the fishing vessels or near the shore. However, the shrimp is most often not peeled in the afore-mentioned countries. Rather, the cooked unpeeled brown shrimp is sent to peeling centers miles away from where they are caught, for example in Morocco or Poland. Afterwards, the peeled brown shrimp, preserved in the traditional way with citric acid and benzoic acid are sent back and only then packaged and sold for consumption.

In view of the long transportation time needed to get the shrimp peeled, it is necessary to subject brown shrimp to a powerful preservation treatment, in addition to cooking the shrimp.

As a preservative for brown shrimp, benzoic acid is typically used in combination with acidulants, such as citric acid and acetic acid. The acidulants provide for a decrease in pH, which has an inhibiting effect on microbiological growth. However, in order to maintain an acceptable taste and texture, the pH cannot be decreased sufficiently to obtain an acceptable shelf life. Accordingly, the presence of benzoic acid and its salts are used as a preservative due to their good activity against spoilage by the microorganisms frequently encountered on brown shrimp. Considering the chemical composition and specific supply chain, a relatively high amount of benzoic acid and sorbic acid is typically used in brown shrimp to prevent the microbiological spoilage, especially compared to other food products. Brown shrimp have an exemption position in EU law with respect to the presence of benzoic acid and sorbic acid. According to the EU in directive 95/2/EC, an exceptionally high amount of 6000 mg/kg preservative (benzoic acid and sorbic acid and their salts) is allowed to be present in brown shrimp.

A disadvantage of using benzoic acid and sorbic acid as preservatives, is that the brown shrimp sold for consumption will contain benzoic acid and sorbic acid. The allowable daily intake (ADI) of benzoic acid and its salts is set at 1-5 mg/kg body weight per day. At a maximal dose of 6000 mg/kg product this would mean that the ADI would be exceeded at 11g (lower limit) - 58g (upper limit) of brown shrimp. This implies that persons who consume this product regularly, could ingest too much benzoic acid. Furthermore, society is criticizing the use of additives more and more by attributing adverse health effects to use of chemical preservatives. Benzoic acid is associated with hyperactivity, high blood pressure and cell damage. Even though some of these effects have been contradicted by certain food safety authorities, food processing companies face more and more pressure to eliminate benzoic acid out of their products. Despite this high pressure, no commercial hand peeled brown shrimp are on the market without benzoic acid.

Although alternative preservation methods have been found for tropical prawns and shrimp, these methods did not work for brown shrimp.

T. Saraoui (International Journal of Food Microbiology 241 (2017) 69-77) describes the use of bioprotective lactic acid bacteria to improve the quality and safety of cooked and peeled (tropical) shrimp. According to this method, shrimp were inoculated with the bacteria strains. The production of lactic acid by the bacteria cannot be regulated.

P. A. Fall (international journal of food microbiology 152 (2012), 52-90) describes the sensory quality and physiochemical evolution during storage of cooked peeled shrimp inoculated with the specific spoilage bacteria *Brochothrix thermosphacta* and *Lactococcus piscium.*

N. Hwanhlem (Eur Food. Res. Technol (2015) 240:1259-1269) describes the application of a nisin Z-producing *Lactococcus lactis* for biopreservation in cooked, peeled and ionized tropical shrimp. R. Münzner (Lebensmitt.-Wiss. Technol. Vol. 7 (1974) No. 5) describes the treatment of shrimp with X-radiation. Both the use of nisin and radiation are not in line with food safety regulations in many countries. Radiation may affect the cell structure and DNA of the shrimp.

Zhuang (Journal of Food Sci, Wiley-Blackwell publishing, Vol. 61, nr. 1, 1 january 1996, pages 241-244) and N. Gokoglu (Acta Aliment, Akademiai Krado, Budapest, Hu, Vol. 33, nr. 2, 1 January 2004, pages 191-199) describe the effect of a number of organic acids (including lactate, acetate and citric acid) on the shelf life of shrimp.

A. Schepens (Voedingsmiddelentechnologie, Keesing, Noordervliet B.V., deel 24, nr. 13, 1 januari 1991, blz. 13-15) describes a method to preserve raw frozen shrimp.

Münzner ("Mikorbiologische Untersuchungen an bestrahlten Garnelen", LWT, Vol. 7 (1974), No 5) describes microbiological research on shrimp which has been subjected to ionizing radiation.

NL2002566 describes a method to preserve shrimp using lactic acid and/or acetic acid. NL2002566 is directed to processing brown shrimp (*Crangon crangon*)*.* It describes a composition comprising cooked, peeled shrimp, which composition further comprises at least 0.7 wt.% lactic acid or acetic acid (or salts thereof) and has a pH higher than 5.0. The composition is free of the preservatives benzoic acid and sorbic acid (and salts thereof).

NL2002566 further describes a method for preserving brown shrimp, wherein the use of benzoic acid and sorbic acid (and salts thereof) is avoided, which method comprises contacting the shrimp with lactic acid and/or acetic acid (and/or salts thereof) in an amount sufficient to provide the final product with over 0.7 wt.% of these acids, and wherein the final product has a pH of at least 5.0, preferably a pH between 5.5 and 6.5. The combined amount of lactic acid and acetic acid is preferably 1-2 wt.%, with more lactic acid being preferably used compared to acetic acid. In the experimental example of NL2002566, an amount of 1.17 wt.% acetic acid is used in the preservation solution.

Attempts have been made to put the method of NL2002566 into practice. However, for an acceptable result, it was necessary to treat the unpeeled shrimp with citric acid and benzoic acid. This resulted in a finished product preserved with 0.1 wt % - 0.2 wt % of benzoic acid, lactic acid and acetic acid each.

A disadvantage of the shrimp product described in NL2002566 was that it did not have sufficient a sufficiently long shelf life to be commercialized. Although NL2002566 alleges the method would result in a shrimp product having a long shelf life in the absence of benzoic acid, this is actually not the case. Even when the unpeeled shrimp were first treated with benzoic acid, resulting in the final peeled shrimp containing 01% - 0,2% benzoic acid, the shelf life observed was not sufficient.

Accordingly, there is a need for brown shrimp that are essentially free of preservatives such as benzoic acid (and benzoates) and sorbic acid (and sorbates) and have a good shelf life.

An object of the invention is to provide a method for preserving shrimp, wherein the final shrimp product has a good shelf life, for example at least 3 weeks at a temperature of about 4-7 °C.

A further object of the invention is to provide a method for preserving shrimp, wherein the final shrimp product has good organoleptic properties, especially with respect to taste.

The inventors found that one or more of the above objects is met by using a preservative solution comprising both an acetate compound and a lactate compound as a preservative for shrimp, wherein the amount of acetate compound used should be sufficiently high, especially relative to the lactate compound. The resulting product has a good shelf life. The shelf life of the product may be at least 3 weeks, preferably at least 4 weeks, as illustrated by the experimental examples described further below.

Accordingly, the invention is based on application of an aqueous preservative solution, which solution comprises a lactate compound and an acetate compound, wherein the solution has a pH of 5.0 or less, wherein the weight ratio between the acetate compound and the lactate compound is higher than 1:1, and said preservative solution comprising at least 1.5 wt.% acetate compound. Such a solution was found to provide shrimp with a better shelf life compared to preservative solutions known from the prior art.

The invention is directed to the use of an aqueous preservative solution for preserving brown shrimp *(Crangon crangon)* which has not been subjected to ionizing radiation and which comprises less than 100 mg/kg shrimp of sorbic acid and salts thereof, and less than 100 mg/kg shrimp of benzoic acid and salts thereof, wherein the aqueous preservative solution comprises an acetate compound and a lactate compound, wherein the weight ratio between the acetate compound and the lactate compound is higher than 1:1, wherein the solution has a pH of 5.0 or less, and wherein the acetate compound is present in the solution in an amount of at least 1.5 wt.%.

The invention is further directed to a method for preserving brown shrimp (*Crangon crangon*) which has not been subjected to ionizing radiation and which comprises less than 100 mg/kg shrimp of sorbic acid and salts thereof, and less than 100 mg/kg shrimp of benzoic acid and salts thereof, comprising the steps of
- a first treatment step, wherein cooked unpeeled shrimp is treated with a first preservative solution comprising an acetate compound and a lactate compound, which solution has a pH of 5.0 or less and wherein the acetate compound is present in an amount of at least 1.5 wt.%; and subsequently peeling the shrimp; and
- a second treatment step, wherein the peeled shrimp is treated with a second preservative solution comprising an acetate compound and a lactate compound, which solution has a pH of 5.0 or less and wherein the acetate compound is present in an amount of at least 1.5 wt.%; and
- packaging the shrimp obtained after removing the second preservative solution,
wherein the second and also the first preservative solutions comprise the acetate compound and the lactate compound in a weight ratio between the acetate compound and the lactate compound of higher than 1:1, preferably at least 2:1.

The invention is further directed to a product comprising cooked, peeled brown shrimp (*Crangon crangon*) which has not been subjected to ionizing radiation and which comprises less than 100 mg/kg shrimp of sorbic acid and salts thereof, and less than 100 mg/kg shrimp of benzoic acid and salts thereof, said product comprising an acetate compound and a lactate compound, wherein the weight ratio between the acetate compound and the lactate compound is higher than 1:1, the product having a pH of at least 5.0, the product having a shelf life of at least 3 weeks. This product can be obtained by the said method.

The invention is further directed to a mixture comprising cooked peeled brown shrimp (*Crangon crangon*) which has not been subjected to ionizing radiation and an aqueous preservative solution, which mixture comprises less than 100 mg/kg shrimp of sorbic acid and salts thereof, and less than 100 mg/kg shrimp of benzoic acid and salts thereof, which preservative solution comprises an acetate compound and a lactate compound, which solution has a pH of 5.0 or less and wherein the acetate compound is present in the solution in an amount of at least 1.5 wt.%, preferably at least 2.5 wt.%, and wherein the weight ratio of acetate compound to lactate compound in the mixture is higher than 1:1, preferably at least 2:1.

The inventors found that when a sufficiently high amount of acetate compound is present in the preservative solution, the resulting shrimp product has an improved shelf life. In order to have a good balanced preservative solution (e.g. in pH), it is preferred to have a higher amount of acetate compound than lactate compound in the solution. The increase in acetate compound content in the preservative solution (compared to NL2002566) was found to have a positive effect on shelf life with respect to fresh odor (e.g. to reduce the ammonia smell of the shrimp) and a reduced risk of bacterial infection, in particular with respect to *Listeria* (*e.g.* reduced risk of *Listeria monocytogenes*).

The term "lactate compound" as used herein refers to all forms of lactate, including lactic acid and salts thereof. For example, the lactate compound may be a lactate salt such as sodium lactate, potassium lactate or calcium lactate. Preferably, a buffer solution of the lactate compound will be present in the aqueous preservative solution. In a buffer solution, both lactic acid in its neutral form and in its anionic form will be present.

The term "acetate compound" as used herein refers to all forms of acetate, including acetic acid and salts thereof. For example, the acetate compound may be an acetate salt such as sodium acetate, potassium acetate or calcium acetate. Preferably, a buffer solution of the acetate compound will be present in the aqueous preservative solution. In a buffer solution, both acetic acid in its neutral form and in its anionic form will be present.

The term "ratio" as used herein refers to the weight ratio, unless explicitly defined otherwise. When determining the lactate compound / acetate compound ratio, the weight used for the acetate compound and lactate compound are based on the weight excluding the weight of any counter ion present.

The aqueous preservative solution according to the invention comprises a lactate compound and an acetate compound. The acetate compound is present in an amount of at least 1.5 wt.%.

The concentration of acetate compound may be at least 2.0 wt.%, for example at least 2.5 wt.% or even at least 3.0 wt.%. For example, the concentration of acetate compound may be 1.5-10 wt.%, preferably 1.5-8 wt.%. High amounts of acetate compound are in particularly preferred when preserving unpeeled shrimp. A sufficiently high amount of acetate compound resulted in a better shelf life, in particular respect to fresh odor (*e.g.* to reduce the ammonia smell of the shrimp), better taste and/or a reduced risk of bacterial infection (*e.g. Listeria monocytogenes*).

The relatively high concentration of acetate compound is preferably compensated by using a relatively low concentration of lactate compound. Accordingly, the ratio between the acetate compound and the lactate compound is higher than 1:1, preferably at least 2:1, more preferably at least 4:1, even more preferably at least 6:1.

The pH of the aqueous preservative solution is less than 5.0. A lower pH may provide for a longer shelf life. Good results were obtained using a pH between 4.5 and 5.0.

The lactate compound may be present in the solution in an amount of at least 0.2 wt.%, preferably at least 0.5 wt.%, more preferably at least 1.0 wt.%. The lactate compound may typically be present in an amount of 0.2-5 wt.%, preferably 0.5-4 wt.%, even more preferably 1.5-2.5 wt.%.

The combined amount of lactate compound and acetate compound is preferably at least 1.7 wt.%, preferably 2.0-5.0 wt.%. A higher concentration of acetate compound is preferably present than lactate compound (based on weight).

The aqueous preservative solution comprises an amount of acetate (*i.e.* excluding any counter ions of the acetate compound) of at least 1.5 wt.%, preferably at least 2.0 wt.%, for example at least 2.5 wt.% or even at least 3.0 wt.%. The amount of acetate present in the solution may for example be 1.5-10 wt.%, preferably 1.5-8. Furthermore, the aqueous preservative solution may comprise an amount of lactate (*i.e.* excluding any counter ions of the lactate compound) at least 0.2 wt.%, preferably at least 0.5 wt.%, more preferably at least 1.0 wt.%. The amount of lactate present may typically be 0.2-5 wt.%, preferably 0.5-4 wt.%, even more preferably 1.5-2.5 wt.%.

The aqueous preservative solution is used for preserving brown shrimp. The aqueous preservative solution can both be used to preserve unpeeled brown shrimp and peeled brown shrimp. In case unpeeled brown shrimp are preserved, the concentration of the acetate and lactate compounds are preferably relatively high. In such a case, the aqueous preservative solution preferably has an acetate compound concentration of at least 2.0 wt.%, more preferably at least 2.5 wt.%, even more preferably at least 3.0 wt.%.

Treating cooked peeled brown shrimp with the aqueous preservative solution of the invention will result in the product of the invention. Preferably, such a treatment is conducted according to the method of the invention.

The product according to the present invention may contain a combined amount of lactate compound and acetate compound of at least 0.7 wt.%. The combined amount of lactate compound and acetate compound present in the shrimp may be up to 3.0 wt.%. The individual content of lactate compound may be in the range of 0.1-1.5 wt.%, preferably 0.3 to 0.8 wt.%. The individual content of acetate compound may be in the range of 0.5-3.0 wt.%, preferably 1.0-2.0 wt.%. The amount of acetate compound is higher than the amount of lactate compound. The amount of acetate compound and lactate compound can e.g. be measured using HPLC.

The product has a pH of at least 5.0, preferably at least 5.5, more preferably at least 5.8, even more preferably at least 6.0. A pH below 5.0 is generally undesirable as it may negatively affect the taste of the shrimp. The product may have a pH that is less than 8.0, preferably less than 7.2, more preferably less than 6.6, even more preferably less than 6.4. The pH of the product may be measured by grinding or mashing the product to a slurry and measuring the pH of the slurry, e.g. using a pH electrode.

The product according to the invention is essentially free of benzoic acid and salts thereof. Furthermore, the product according to the invention is also essentially free of sorbic acid and salts thereof.

The product is essentially free of benzoic acids and salts thereof, as well as essentially free of sorbic acid and salts thereof. The term essentially free refers to a content of less than 100 mg/kg shrimp, preferably less than 50 mg/kg product.

Furthermore, the product is not an irradiated product, *i.e.* a product that has been exposed to ionizing radiation. Ionizing radiation, such as from gamma rays, x-rays or electron beams, may increase the shelf life of a food product, this type of treatment is considered undesirable from both a, a consumer perspective and an economic perspective.

Very good results were obtained by using a lactate containing fermentation product as or as part of the preservative. The term "fermentation product" as used herein refers to a reaction product obtained in a fermentation process. In particular, it refers to a reaction product of lactic acid fermentation. In lactic acid fermentation, sugar is converted to lactate by micro-organisms. This is typically an anaerobic process. The sugars are typically one or more six-carbon sugars (such as glucose) and/or disaccharides thereof (such as sucrose and/or lactose). The reaction product comprises the lactate produced by the micro-organisms.

In case a lactate containing fermentation product is used as the preservative, at least the majority of the fermentation product (*i.e.* at least 50 wt.%, preferably at least 70 wt.%, *e.g.* at least 90 wt.%) is constituted by lactate. The lactate containing fermentation product may comprise 50-99, for example 60-95 wt.% lactate or 70-85 wt.% lactate, based on the total dry weight of the fermentation product. The lactate may be present in any form, for example as free lactic acid or as a salt of lactate acid, such as sodium lactate and calcium lactate. The lactate is produced by the micro-organisms in the fermentation reaction.

In one embodiment, the major part of the lactate in the fermentation product is made up by sodium and calcium salts. Hence, in a preferred embodiment, the fermentation product comprises lactate anions, sodium cations and calcium cations, wherein the combined amount of sodium and calcium cations exceeds 0.5 of the stoichiometric equivalent, preferably it exceeds 0.75 of the stoichiometric equivalent, more preferably it exceeds 0.9 of the stoichiometric equivalent. As will be understood by those skilled in the art, the stoichiometric equivalent refers to the combined amount of sodium and calcium cations that would theoretically be necessary to provide counter-ions for all lactate anions. The fermentation product may contain sodium and calcium ions in a Na:Ca ratio (w/w) within the range of 1/6 to 1/2, preferably within the range of 1/5.5 - 1/2.5, most preferably within the range of 1/5 - 1 -1/3, *e.g.* 1/4. In one embodiment, the lactate containing fermentation product consists only of sodium lactate and calcium lactate.

An example of a suitable lactate containing fermentation product is the lactate ferment described in WO 2014/112870. This product is prepared by (a) providing a nutrient medium comprising a solution of a fermentable substrate and a nitrogen source in an aqueous medium; (b) inoculating said nutrient medium with lactic acid producing micro-organism, preferably lactic acid bacteria; and (c) incubating the inoculated nutrient medium nutrient medium under conditions favorable to the growth and/or metabolic activity of said lactic acid producing micro-organism for a period sufficient to produce a fermentation broth containing at least 20 g/1 of lactate equivalents, during which period the pH of the fermentation broth is controlled by addition of one or more alkalization agents comprising alkaline sodium and alkaline calcium salts, wherein the Na:Ca (w/w) ratio of the added salts is within the range of 1/6 - 1/1, preferably 1/6 - 112.

After having been treated with the preservative, the resulting shrimp product may be packaged. For packaging use can be made of a thermoforming. Preferably, the shrimp product is packaged under a modified atmosphere. The inventors found that the combination of the treatment with the preservative and modified atmosphere packaging (MAP) may provide for a particular good shelf life. The modified atmosphere is preferably an atmosphere comprising at least 15 vol.% CO₂, more preferably at least 25 vol.% CO₂, even more preferably at least 35 vol.%. Further, nitrogen gas (N₂) may be present in the reduced atmosphere. As dinitrogen gas acts as an inert gas, this may be used as the balance. For example, nitrogen gas may be present in an amount of 0-85 vol.%, typically in an amount of 25-75 wt.%, such as 50-65 vol.%. The presence of CO₂ has a positive effect on the shelf life of the product.

The invention may further be directed to the shrimp product according to the invention, wherein the product is packaged in the packaging material under a modified atmosphere. The modified atmosphere is as described above. The volume ratio of gas and product in the packaging material is preferably between 1:3 and 3:1. The gas has the composition of the modified atmosphere described above.

The invention is further directed to a method for producing the shrimp product according to the invention. Accordingly, the invention provides for a method for preserving brown shrimp *(Crangon crangon)* which has not been subjected to ionizing radiation and which comprises less than 100 mg/kg shrimp of sorbic acid and salts thereof, and less than 100 mg/kg shrimp of benzoic acid and salts thereof, comprising the steps of
- a first treatment step, wherein cooked unpeeled shrimp is treated with a first preservative solution comprising an acetate compound and a lactate compound, which solution has a pH of 5.0 or less and wherein the acetate compound is present in an amount of at least 1.5 wt.%; and subsequently peeling the shrimp; and
- a second treatment step, wherein the peeled shrimp is treated with a second preservative solution comprising an acetate compound and a lactate compound, which solution has a pH of 5.0 or less and wherein the acetate compound is present in an amount of at least 1.5 wt.%; and
- packaging the shrimp obtained after removing the second preservative solution,
wherein the second and also the first preservative solutions comprise the acetate compound and the lactate compound in a weight ratio between the acetate compound and the lactate compound of higher than 1:1, preferably at least 2:1.

The preservative solution used in the first and second preservation step may be the same or a different solution. Both preservative solutions should fulfill the same requirements with respect to compounds present, pH, and concentrations. These are described below.

The preservative solution comprises a lactate compound and an acetate compound. The lactate compound is preferably present in the solution in an amount of at least 0.2 wt.%, preferably at least 0.5 wt.%, more preferably at least 1.0 wt.%. The lactate compound may typically be present in an amount of 0.2-5 wt.%, preferably 0.5-4 wt.%. The acetate compound is preferably present in an amount of at least 1.5 wt.%. The acetate compound may typically be present in an amount of 1.5-10 wt.%, preferably 1.5-8 wt.%. The ratio between the acetate compound and the lactate compound is higher than 1:1, preferably at least 2:1, more preferably at least 4:1, even more preferably at least 6:1. It was found that a better taste of the product was achieved when using a concentration of lactate compound that is relatively low compared to the concentration of acetate compound.

The pH of the solution is 5.0 or less. A lower pH may provide for a longer shelf life. Good results were obtained using a pH between 4.5 and 5.0.

Preferably, the preservative solution used in the method of the invention is the aqueous preservative solution as defined above.

The amount of preservative solution used may be 0.1-10 liter solution per kg shrimp, preferably 0.5-2 liter solution per kg shrimp.

In each treatment step, shrimp is contacted with the preservative solution. The shrimp is preferably contacted with the shrimp at low temperatures. However, the temperature is preferably not so low that water on the shrimp or on the preservative starts to freeze. Accordingly, the temperature at which the shrimp is contacted may be between -3 and 6 °C, preferably between -2 and 1 °C. In view of the desirable low temperatures, it is preferable to cool the shrimp after cooking (*e.g.* to a temperature below 25 °C) before subjecting them to a treatment with a preservative solution.

The shrimp may be contacted with the preservative in several ways. Preferably, the shrimp is contacted with the preservative by submerging the shrimp in an aqueous solution comprising said preservative. Alternatively, the shrimp be continuously mixed with the preservative solution, e.g. using a tumbling container. Each treatment step may for example comprise the steps of submerging the peeled shrimp in the second preservative solution; and removing the preservative solution from the peeled shrimp. The solution can be removed, for example by pouring off the solution or by filtration.

The first treatment is a relatively short step. The unpeeled shrimp is contacted with the aqueous solution for less than an hour, typically less than 20 minutes, preferably for about 1-10 minutes, more preferably for 2-5 minutes. This treatment is conducted to preserve the shell for transport, especially for protecting the outside for microbiological grow and/or spoilage. The aqueous preservative solution preferably has a relatively higher acetate compound and lactate compound concentration, in particular compared to the aqueous preservative solution used for the second treatment. The unpeeled shrimp may be contacted by mixing the unpeeled shrimp and the aqueous solution, e.g. by submerging or by continuous mixing. The weight ratio of unpeeled shrimp to solution used may be between 1:10 and 10:1, preferably between 4:1 and 1:1, more preferably about 2:1. The aqueous solution may be removed by draining the liquid from the unpeeled shrimp, *e.g.* by filtration.

The second treatment is conducted after peeling the shrimp. The peeled shrimp may be contacted with the aqueous solution for at least 2 hours, preferably at least 24 hours, more preferably at least 48 hours. This step is to preserve the peeled shrimp for transport. The second treatment may be conducted for several days, e.g. 2-5 days, typically 3-4 days. The shrimp are preferably submerged in the preservative solution for at least 24 hours, more preferably at least 48 hours. The weight ratio of shrimp to solution used may be between 1:10 and 10:1, preferably between 3:1 and 1:2, more preferably about 1:1.

Preferably, the aqueous solution used in the first treatment step has a higher concentration of acetate compound compared to the aqueous solution used in the second treatment step. The concentration may differ by a factor 1.5 or higher, or even a factor 2.0 or higher. For example, the acetate compound concentration in the aqueous solution in the first treatment step may be at least 2.5 wt.%, preferably at least 3.0 wt.%, while the acetate compound concentration in the aqueous solution in the second treatment is at least 1.5 wt.%. Similarly, the aqueous solution used in the first treatment step preferably has a higher concentration of lactate compound compared to the aqueous solution used in the second treatment step. Again, the concentration may differ by a factor 1.5 or higher, preferably a factor 2.0 or higher.

In a preferred embodiment, the second preservative solution is removed less than 24 hours before packaging the shrimp, preferably less than 12 hours before packaging the shrimp. The solution can be removed, for example by pouring off the solution or by filtration.

According to the method of the invention, the shrimp are not treated with any preservatives quantum satis. This in particular means that the method of the invention does not comprise any step wherein benzoic acid (or salts thereof) or sorbic acid (or salts thereof) are added to the shrimp.

The shrimp is preferably packaged under modified atmosphere, in particular under an atmosphere comprising at least 10% CO₂. The preferred conditions for the modified atmosphere are as described above for the product of the invention.

In a preferred embodiment, the method according to the invention may comprise the additional step of maintaining the shrimp at a temperature of -3 to 6 °C for at least 2 days. This step may be conducted after the first and/or after the second treatment step. This represents the time needed for transporting the shrimp from the location where it is caught, cooked and subjected to the first treatment to the location where the shrimp is peeled and subjected to the second treatment. During transport, the shrimp should be kept at a low temperature of -3 to 6°C, preferably -2 to 1 °C.

In a particular preferred embodiment, the method according to the invention comprises the steps of
- cooking the shrimp; and
- a first treatment step, wherein the cooked shrimp is treated with a first preservative solution comprising a lactate compound or an acetate compound or both, which solution has a pH of 5.0 or less, wherein the first treatment step is preferably conducted for 1 to 60 minutes, more preferably for 1 to 10 minutes; and
- maintaining the shrimp obtained in the first treatment step at a temperature of -3 to 6 °C for at least 2 days;
- peeling the shrimp obtained in the previous step;
- a second treatment step wherein the peeled shrimp is submerged in the second preservative solution; and
- maintaining the submerged peeled shrimp at a temperature of -3 to 6 °C for at least 2 days; and
- removing the second preservative solution from the peeled shrimp;
- packaging the shrimp obtained after removing the second preservative solution, wherein the second preservative solution is removed less than 24 hours before packaging the shrimp.

The invention is further directed to a mixture comprising or consisting of peeled brown shrimp and an aqueous preservative solution. The preservative solution is as described above for the method of the invention. The solution comprises a lactate compound, an acetate compound or both. The solution has a pH of 5.0 or less and the ratio of acetate compound to lactate compound is at least 1:1, preferably at least 2:1. In a preferred embodiment, the aqueous preservative is the same as defined above for the use of the invention. In case of unpeeled shrimp, the weight ratio of shrimp to solution may be between 1:10 and 10: 1, preferably between 4:1 and 1:1, more preferably about 2:1. In case of peeled shrimp, the weight ratio of shrimp to solution may be between 1:10 and 10: 1, preferably between 3:1 and 1:2, more preferably about 1:1.

### Example 1: preparation of preservative solutions

Preservative solutions comprising 2 wt.% acetic acid and 1 wt.% lactic acid was prepared by mixing water, 30% NaOH solution, sodium chloride, biological vinegar (comprising 12% acetic acid), and a reaction product of lactic acid fermentation (comprising 50% lactic acid). Six different solutions were prepared, each comprising 16.48 wt.% vinegar and 2.43 lactic acid fermentation product, but each having a different pH. The composition of the preservative solution is shown in Table 1.

**Table 1**

| | water (wt.%) | acetic acid (wt.%) | lactic acid (wt.%) | NaCl (wt.%) | 30% NaOH solution (wt.%) | pH |
|---|---|---|---|---|---|---|
| Solution 1 | 75.96 | 2.0 | 1.2 | 2.28 | 2.85 | 4.9 |
| Solution 2 | 75.66 | 2.0 | 1.2 | 2.28 | 3.15 | 5.1 |
| Solution 3 | 75.36 | 2.0 | 1.2 | 2.28 | 3.45 | 5.3 |
| Solution 4 | 75.06 | 2.0 | 1.2 | 2.28 | 3.75 | 5.5 |

Furthermore, six preservative solutions were prepared in a similar way, but less water was added such that these solutions were twice as concentrated as those shown in Table 1.

The concentrated solutions were used as the first preservative solution. The solutions having the composition shown in Table 1 were used as the second preservative solution.

### Example 2: preservation of brown shrimp

A batch of 50 kg fresh cooked unpeeled brown shrimp was put into a tumbling container together with 25 liters of the first preservative solution. The shrimp and solution were mixed for 3 minutes by tumbling. The solution was then removed by draining the solution from the container for 1 minute. The preserved, unpeeled shrimp were collected in three plastic bags of 17 kg, which were closed and transported to Morocco in 3 to 4 days while kept at a temperature of 0-2°C.

The shrimp were manually peeled in Morocco. The total weight of the peeled shrimp was about 18 to 19 kg. The peeled shrimp were divided into four portions of about 4.5 kg. Each portion was placed in a plastic bag together with 2.8 liters of the second preservative solution, after which the bag was sealed shut. The four bags thus obtained were transported back to the Netherlands while being kept at a temperature of 0-2°C.

The above preservation method was conducted four times, each using one of the four preservative solutions described in Example 1. Thus, shrimp products 1, 2, 3 and 4 were obtained corresponding to shrimps treated with preservative solution 1, 2, 3 and 4, respectively. As four bags of shrimp were obtained for each shrimp product, there were 16 bags in total, which were analyzed as discussed in Examples 3, 4 and 5.

### Example 3: Effect of Treatment Time on Shelf Life

For each of shrimp products 1-4, the first bag was opened upon arrival in the Netherlands (seven days after peeling). The second bag was opened 14 days after peeling, while the third bag was opened after 28 days and the fourth bag after 42 days. After opening a bag, the following measurements were conducted on the shrimp in order to determine how well the shrimp were preserved while being submerged in the different preservative solutions for various durations of time.

### Odor analysis:

The smell of the preserved shrimp was judged on a three point scale (bad - doubtful - good). The results are shown in Table 2.

**Table 2: shelf life of shrimp submerged in preservative solution**

| | 1 week | 2 weeks | 4 weeks | 6 weeks |
|---|---|---|---|---|
| solution 1 | good | good | good | good |
| solution 2 | good | good | doubtful | bad |
| solution 3 | good | good | doubtful | bad |
| solution 4 | good | doubtful | bad | not determined |

As can be seen in Table 2, the shrimp treated with preservative solution 1 (having a pH of 4.9) showed a good smell for the longest period of time, even after 6 weeks. None of the shrimp treated with preservative solutions 2-4 (all with a pH>5) had a good smell 4 weeks after peeling. It can be concluded that while being submerged in preservative solution, the shrimp will have a shelf life that depends on the pH of the preservative solution.

### Total viable count

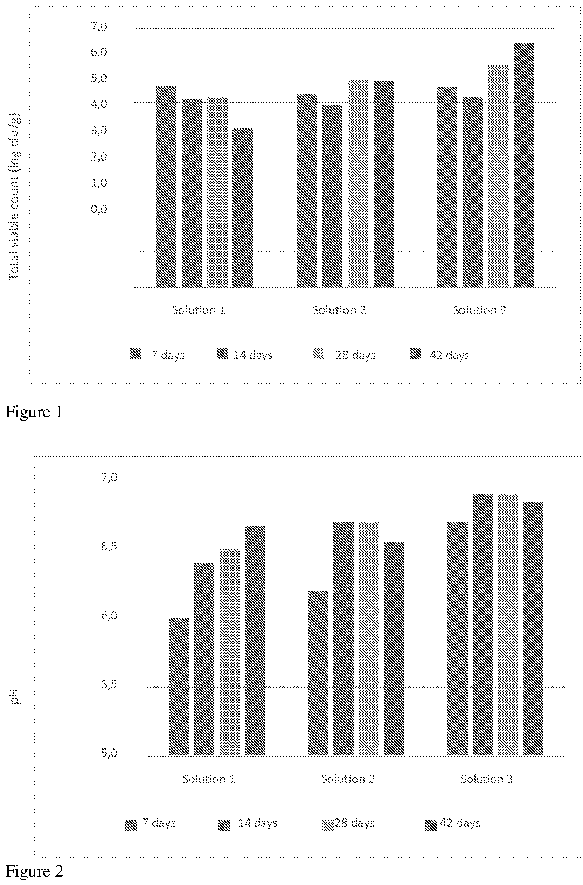

The total viable count (log cfu/g) of psychotrophic aerobic bacteria was determined for the shrimp in each bag according to ISO standard 4833-1 (2013). The result are shown in Figure 1, wherein for each solution the left bar indicates the total viable count at 7 days, the middle left bar at 21 days, the middle right bar at 28 days and the right bar at 42 days. All total viable counts were below the threshold where one would expect spoilage.

### pH

The pH was measured for the shrimp in each bag by grinding, mashing and/or milling the shrimp into a slurry and subsequently determining the pH of the thus obtained shrimp slurry using a pH electrode. The results are shown in Figure 2.

### Example 4: Effect of MAP on Shelf Life

The shrimp from the first bag of each shrimp product (which was opened 7 days after peeling), was taken out of the bag and dried for at least 8 hours. After drying, the shrimp were divided in five portions and each portion was packaged under modified atmosphere (MAP), resulting in five packages for each shrimp product. Each package contained a modified atmosphere with 35-45 % CO₂ and 55-65% N₂. The volume ratio of product to gas in the package was 1:1. The shrimp was kept at a temperature of 0-4 °C until they were analyzed.

The shrimp in the first package was analyzed directly after packaging. The shrimp in the other four packages were analyzed 7, 14, 21 and 28 days after packaging. The shrimp was analyzed as follows.

### Odor analysis:

The smell of the preserved shrimp was judged on a three point scale (bad - doubtful - good). The results are shown in Table 3.

**Table 3: shelf life of MAP packaged preserved shrimp**

| | 0 | 7 days | 14 days | 21 days | 28 days |
|---|---|---|---|---|---|
| solution 1 | good | good | good | good | good |
| solution 2 | good | good | good | good | good |
| solution 3 | good | good | good | doubtful | good |
| solution 4 | good | good | doubtful | bad | bad |

It can be concluded from the results that the shrimp packaged directly upon arrival of the shrimp (7 weeks after peeling) generally reached the desired shelf life of 28 days.

### Example 5: Effect of MAP on Shelf Life

The packaging method described in Example 3 was also conducted for the other shrimp of Example 2, *i.e.* the shrimp submerged in preservative solution for 2, 4 and 6 weeks. Each of these shrimp were packaged and subsequently analyzed after 0, 7, 14 and 21 days similar to Example 3. The results are shown in the tables below.

### Odor analysis:

The smell of the preserved shrimp was judged on a three point scale (bad - doubtful - good) by a panel of five people. The results are shown in Table 4.

**Table 4: shelf life of MAP packaged preserved shrimp based on smell**

| | before packaging | 0 | 7 days | 14 days | 21 days | 28 days |
|---|---|---|---|---|---|---|
| solution 1 (2 weeks) | good | good | good | good | good | good |
| solution 2 (2 weeks) | good | good | good | doubtful | doubtful | doubtful |
| solution 3 (2 weeks) | good | good | doubtful | doubtful | bad | bad |
| solution 1 (4 weeks) | good | good | good | good | good | doubtful |
| solution 2 (4 weeks) | doubtful | doubtful | doubtful | bad | bad | bad |
| solution 3 (4 weeks) | doubtful | bad | bad | bad | bad | bad |
| solution 1 (6 weeks) | good | good | good | good | doubtful | doubtful |
| solution 3 (6 weeks) | bad | n.d.* | n.d. * | n.d. * | n.d. * | n.d. * |
| solution 3 (6 weeks) | bad | n.d. * | n.d. * | n.d. * | n.d. * | n.d. * |

| | | | | | | |
|---|---|---|---|---|---|---|
| * n.d. = not determined | | | | | | |

### Total viable count

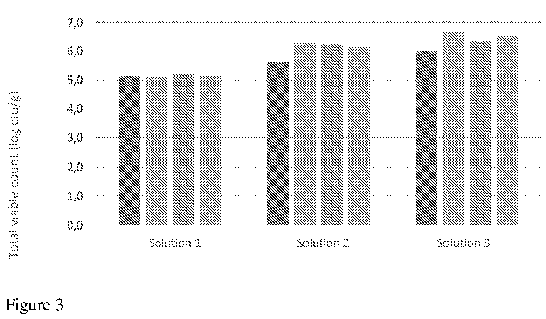

The total viable count of psychotrophic aerobic bacteria was determined according the ISO standard 4833-1. The results are shown in Figure 3, wherein for each solution the left bar indicates the total viable count at 7 days, the middle left bar at 21 days, the middle right bar at 28 days and the right bar at 42 days. Similar to Example 3, none of the shrimp reached the threshold level of 7 at which one would expect microbial spoilage. It is hypothesized that next to microbial growth, microbial metabolism also plays an important role. With total counts between 10⁵ and 10⁷ cfu/g , specific spoilage organisms may already produce metabolic compounds which give off a bad odor. At low total counts, specific spoilage organisms may already produce metabolic compounds which give off a bad odor.

The total viable count was determined according to the ISO standard mentioned above. The results are shown in Figure 3, wherein for each solution the total viable count before packaging (left bar), total viable count at 7 days (middle left bar), 21 days (middle right bar) and at 28 days (right bar) is indicated. None of the shrimp reached the threshold level of 7 at which one would expect microbial spoilage to have occurred.

### Total volatile bases

The total volatile compounds were determined in mg/kg. The results are given in Table 5. The threshold for these compounds is typically 35 mg/kg. This value was exceeded for the shrimp samples determined in Table 4 as having a bad odor. Shrimp samples indicated as having a doubtful odor gave values around this value and those with good odor far below.

**Table 5: shelf life of MAP packaged preserved shrimp based on total volatile bases (mg/kg)**

| | before packaging | 0 | 7 days | 14 days | 21 days | 28 days |
|---|---|---|---|---|---|---|
| solution 1 (2 weeks) | n.d.* | n.d.* | n.d.* | n.d.* | n.d.* | 16.4 |
| solution 2 (2 weeks) | n.d.* | n.d.* | n.d.* | n.d.* | n.d.* | 61.7 |
| solution 3 (2 weeks) | n.d.* | n.d.* | n.d.* | n.d.* | n.d.* | 64.9 |
| solution 1 (4 weeks) | 13.4 | n.d.* | n.d.* | n.d.* | 37.3 | 52.5 |
| solution 2 (4 weeks) | 50.05 | n.d.* | n.d.* | n.d.* | 70.3 | 75.0 |
| solution 3 (4 weeks) | 58.3 | n.d.* | n.d.* | n.d.* | 74.3 | 82.9 |
| solution 1 (6 weeks) | 14.5 | 14.6 | 17.0 | 19.5 | 33.4 | 45.2 |
| solution 3 (6 weeks) | 70.9 | n.d.* | n.d.* | n.d.* | n.d.* | n.d.* |
| solution 3 (6 weeks) | 94.1 | n.d.* | n.d.* | n.d.* | n.d.* | n.d.* |

| | | | | | | |
|---|---|---|---|---|---|---|
| * n.d. = not determined | | | | | | |

### Example 6: Effect of treatment on acid content and pH on shrimp

Peeled shrimp were submerged in the preservative solutions 1-4 of Example 1 (pH 4.9 to 5.5) for 48 hours and the lactic acid content and acetic acid content monitored. The lactic acid content and lactic acid content were determined using HPLC.

A rapid increase of lactic acid and acetic acid in the shrimp was measured during the first 8 hours, followed by a small increase between 8 and 24h. The changes in content during the next 24 hours were negligible. The final amount of lactic acid in the shrimp was between 3500 and 4500 mg lactic acid per kg shrimp. The final amount of acetic acid was between 7500 and 8500 mg acetic acid per kg shrimp. No significant difference was observed in the amount of lactic acid and acetic acid between the shrimp treated with different preservative solutions.

The results are shown in Table 6 and 7.

**Table 6: lactic acid content in treated shrimp**

| | lactic acid content (mg/kg) after 8h | lactic acid content (mg/kg) after 24h | lactic acid content (mg/kg) after 48h |
|---|---|---|---|
| Solution 1 | 2950 | 3400 | 3805 |
| Solution 2 | 3380 | 3628 ± 668 | 4093 ± 159 |
| Solution 3 | 2780 | 3900 ± 990 | 4200 ± 686 |
| Solution 4 | 2630 | 3835 ± 474 | 4030 ± 212 |

**Table 7: acetic acid content in treated shrimp**

| | acetic acid content (mg/kg) after 8h | acetic acid content (mg/kg) after 24h | acetic acid content (mg/kg) after 48h |
|---|---|---|---|
| Solution 1 | 6780 | 7400 | 7885 |
| Solution 2 | 7095 | 3598 ± 322 | 8170 ± 375 |
| Solution 3 | 6065 | 7675 ± 735 | 8120 ± 803 |
| Solution 4 | 6070 | 7820 ± 64 | 8003 ± 134 |

### Example 7: Effect of Acetate Concentration

Similar examples as described in Examples 1-5 are currently conducted wherein the concentration of the acetate compound and the lactate/acetate ratio in the preservative solutions are varied. Such examples will quantify the positive effect of using high acetate concentrations.

## Claims

1. Use of an aqueous preservative solution for preserving brown shrimp (*Crangon crangon*) which has not been subjected to ionizing radiation and which comprises less than 100 mg/kg shrimp of sorbic acid and salts thereof, and less than 100 mg/kg shrimp of benzoic acid and salts thereof, wherein the aqueous preservative solution comprises an acetate compound and a lactate compound, wherein the weight ratio between the acetate compound and the lactate compound is higher than 1:1, wherein the solution has a pH of 5.0 or less, and wherein the acetate compound is present in the solution in an amount of at least 1.5 wt.%.

2. Product comprising cooked, peeled brown shrimp *(Crangon crangon*) which has not been subjected to ionizing radiation and which comprises less than 100 mg/kg shrimp of sorbic acid and salts thereof, and less than 100 mg/kg shrimp of benzoic acid and salts thereof, said product comprising an acetate compound and a lactate compound, wherein the weight ratio between the acetate compound and the lactate compound is higher than 1:1, the product having a pH of at least 5.0, the product having a shelf life of at least 3 weeks.

3. Product according to claim 2, wherein the product contains a combined amount of 0.7 - 3.0 wt.% of the acetate compound and the lactate compound and/or wherein the product has a pH in the range of 5.0 - 8.0, preferably in the range of 6.0 - 6.6.

4. Product according to any of claims 2-3, wherein the lactate compound is a reaction product from a fermentation reaction.

5. Product according to any of claims 2-4, wherein the product is packaged in a packaging material under modified atmosphere, preferably wherein the modified atmosphere comprises at least 15 vol.% CO₂, more preferably at least 35 vol.% CO₂.

6. A method for preserving brown shrimp (*Crangon crangon*) which has not been subjected to ionizing radiation and which comprises less than 100 mg/kg shrimp of sorbic acid and salts thereof, and less than 100 mg/kg shrimp of benzoic acid and salts thereof, comprising the steps of
- a first treatment step, wherein cooked unpeeled shrimp is treated with a first preservative solution comprising an acetate compound and a lactate compound, which solution has a pH of 5.0 or less and wherein the acetate compound is present in an amount of at least 1.5 wt.%; and subsequently peeling the shrimp; and
- a second treatment step, wherein the peeled shrimp is treated with a second preservative solution comprising an acetate compound and a lactate compound, which solution has a pH of 5.0 or less and wherein the acetate compound is present in an amount of at least 1.5 wt.%; and
- packaging the shrimp obtained after removing the second preservative solution,
wherein the second and also the first preservative solutions comprise the acetate compound and the lactate compound in a weight ratio between the acetate compound and the lactate compound of higher than 1:1, preferably at least 2:1.

7. A method according to claim 6, wherein the first treatment is conducted for 1-10 minutes with a first preservative solution comprising at least 2.5 wt.% acetate compound, while the second treatment is conducted for at least 24 hours with a second preservative solution comprising less than 2.5 wt.% acetate compound.

8. A method according to claim 6 or 7, wherein the second treatment step comprises the steps of
- submerging the peeled shrimp in the second preservative solution; and
- removing the second preservative solution from the peeled shrimp; wherein the second preservative solution is removed less than 24 hours before packaging the shrimp.

9. A method according to any of claims 6-8, wherein the shrimp is packaged under modified atmosphere, preferably under an atmosphere comprising at least 15 vol.% CO₂.

10. A method according to any of claims 6-9 comprising the steps of
- cooking the shrimp; and
- a first treatment step, wherein cooked shrimp is treated with a first preservative solution comprising the lactate compound and the acetate compound, which solution has a pH of 5.0 or less; and
- maintaining the shrimp obtained in the first treatment step at a temperature of -3 to 6 °C for at least 2 days;
- peeling the shrimp obtained in the previous step;
- a second treatment step wherein the peeled shrimp is submerged in the second preservative solution; and
- maintaining the submerged peeled shrimp at a temperature of -3 to 6 °C for at least 2 days; and
- removing the second preservative solution from the peeled shrimp;
- packaging the shrimp obtained after removing the second preservative solution, wherein the second preservative solution is removed less than 24 hours before packaging the shrimp.

11. Mixture comprising cooked peeled brown shrimp *(Crangon crangon*) which has not been subjected to ionizing radiation and an aqueous preservative solution, which mixture comprises less than 100 mg/kg shrimp of sorbic acid and salts thereof, and less than 100 mg/kg shrimp of benzoic acid and salts thereof, which preservative solution comprises an acetate compound and a lactate compound, which solution has a pH of 5.0 or less and wherein the acetate compound is present in the solution in an amount of at least 1.5 wt.%, preferably at least 2.5 wt.%, and wherein the weight ratio of acetate compound to lactate compound in the mixture is higher than 1:1, preferably at least 2:1.

## Patentansprüche

1. Verwendung einer wässrigen Konservierungslösung zum Konservieren von Nordseegarnelen (*Crangon crangon*), die keiner ionisierenden Strahlung ausgesetzt wurden und die weniger als 100 mg/kg Garnelen Sorbinsäure und deren Salzen, und weniger als 100 mg/kg Garnelen von Benzoesäure und deren Salzen umfassen, wobei die wässrige Konservierungslösung eine Acetatverbindung und eine Lactatverbindung umfasst, wobei das Gewichtsverhältnis zwischen der Acetatverbindung und der Lactatverbindung höher als 1:1 ist, wobei die Lösung einen pH von 5,0 oder weniger hat, und wobei die Acetatverbindung in der Lösung in einer Menge von mindestens 1,5 Gew.-% vorhanden ist.

2. Produkt umfassend gekochte, geschälte Nordseegarnelen (*Crangon crangon),* die keiner ionisierenden Strahlung ausgesetzt wurden und die weniger als 100 mg/kg Garnelen von Sorbinsäure und deren Salzen, und weniger als 100 mg/kg Garnelen von Benzoesäure und deren Salzen umfassen, das Produkt umfassend eine Acetatverbindung und eine Lactatverbindung, wobei das Gewichtsverhältnis zwischen der Acetatverbindung und der Lactatverbindung höher als 1:1 ist, das Produkt mit einem pH von mindestens 5,0, das Produkt mit einer Haltbarkeit von mindestens 3 Wochen.

3. Produkt nach Anspruch 2, wobei das Produkt eine kombinierte Menge von 0,7 - 3,0 Gew.-% Acetatverbindung und Lactatverbindung enthält und/oder wobei das Produkt einen pH in dem Bereich von 5,0 - 8,0, vorzugsweise in dem Bereich von 6,0 - 6,6 hat.

4. Produkt nach einem der Ansprüche 2 - 3, wobei die Lactatverbindung ein Reaktionsprodukt von einer Fermentationsreaktion ist.

5. Produkt nach einem der Ansprüche 2 - 4, wobei das Produkt in einem Verpackungsmaterial unter modifizierter Atmosphäre verpackt ist, vorzugsweise wobei die modifizierte Atmosphäre mindestens 15 Vol.-% CO₂, bevorzugter mindestens 35 Vol.-% CO₂ umfasst.

6. Verfahren zum Konservieren von Nordseegarnelen *(Crangon crangon),* die keiner ionisierenden Strahlung ausgesetzt wurden und die weniger als 100 mg/kg Garnelen Sorbinsäure und deren Salzen, und weniger als 100 mg/kg Garnelen Benzoesäure und deren Salzen umfassen, umfassend die Schritte von:
- einen ersten Behandlungsschritt, wobei gekochte, ungeschälte Garnelen mit einer ersten Konservierungslösung behandelt werden, umfassend eine Acetatverbindung und eine Lactatverbindung, die Lösung hat einen pH von 5,0 oder weniger und wobei die Acetatverbindung in einer Menge von mindestens 1,5 Gew.-% vorhanden ist; und anschließendes Schälen der Garnelen; und
- einen zweiten Behandlungsschritt, wobei die geschälten Garnelen mit einer zweiten Konservierungslösung behandelt werden, umfassend eine Acetatverbindung und eine Lactatverbindung, wobei die Lösung einen pH von 5,0 oder weniger hat und wobei die Acetatverbindung in einer Menge von mindestens 1,5 Gew.-% vorhanden ist; und
- Verpacken der Garnelen, erhalten nach Entfernen der zweiten Konservierungslösung,
wobei die zweite und auch die erste Konservierungslösung die Acetatverbindung und die Lactatverbindung in einem Gewichtsverhältnis zwischen der Acetatverbindung und der Lactatverbindung von höher als 1:1, vorzugsweise mindestens 2:1, umfassen.

7. Verfahren nach Anspruch 6, wobei die erste Behandlung für 1 - 10 Minuten mit einer ersten Konservierungslösung durchgeführt wird, umfassend mindestens 2,5 Gew.-% Acetatverbindung, während die zweite Behandlung für mindestens 24 Stunden mit einer zweiten Konservierungslösung durchgeführt wird, umfassend weniger als 2,5 Gew.-% Acetatverbindung.

8. Verfahren nach Anspruch 6 oder 7, wobei der zweite Behandlungsschritt die Schritte umfasst von:
- Eintauchen der geschälten Garnelen in die zweite Konservierungslösung; und
- Entfernen der zweiten Konservierungslösung von den geschälten Garnelen;
wobei die zweite Konservierungslösung weniger als 24 Stunden vor dem Verpacken der Garnelen entfernt wird.

9. Verfahren nach einem der Ansprüche 6 - 8, wobei die Garnelen unter modifizierter Atmosphäre, vorzugsweise unter einer Atmosphäre umfassend mindestens 15 Vol.-% CO₂, verpackt werden.

10. Verfahren nach einem der Ansprüche 6 - 9 umfassend die Schritte von:
- Kochen der Garnelen; und
- einen ersten Behandlungsschritt, wobei gekochte Garnelen mit einer ersten Konservierungslösung behandelt werden, umfassend die Lactatverbindung und die Acetatverbindung, wobei die Lösung einen pH von 5,0 oder weniger hat; und
- Halten der im ersten Behandlungsschritt erhaltenen Garnelen bei einer Temperatur von -3 bis 6 °C für mindestens 2 Tage;
- Schälen der im vorherigen Schritt erhaltenen Garnelen;
- einen zweiten Behandlungsschritt, wobei die geschälten Garnelen in die zweite Konservierungslösung eingetaucht werden; und
- Halten der eingetauchten, geschälten Garnelen für mindestens 2 Tage bei einer Temperatur von -3 bis 6 °C; und
- Entfernen der zweiten Konservierungslösung von den geschälten Garnelen;
- Verpacken der nach Entfernen der zweiten Konservierungslösung erhaltenen Garnelen, wobei die zweite Konservierungslösung weniger als 24 Stunden vor dem Verpacken der Garnelen entfernt wird.

11. Mischung umfassend gekochte, geschälte Nordseegarnelen (*Crangon crangon),* die keiner ionisierenden Strahlung ausgesetzt wurden, und eine wässrige Konservierungslösung, wobei die Mischung weniger als 100 mg/kg Garnelen Sorbinsäure und deren Salzen, und weniger als 100 mg/kg Garnelen Benzoesäure und deren Salzen umfasst, die Konservierungslösung umfasst eine Acetatverbindung und eine Lactatverbindung, die Lösung hat einen pH von 5,0 oder weniger, und wobei die Acetatverbindung in der Lösung in einer Menge von mindestens 1,5 Gew.-%, vorzugsweise von mindestens 2,5 Gew.-%, vorhanden ist, und wobei das Gewichtsverhältnis von Acetatverbindung zu Lactatverbindung in der Mischung höher als 1:1, vorzugsweise mindestens 2:1 ist.

## Revendications

1. Utilisation d'une solution aqueuse de conservation pour conserver des crevettes grises *(Crangon crangon)* qui n'ont pas été soumises à l'action d'un rayonnement ionisant et qui contiennent moins de 100 mg, par kg de crevettes, d'acide sorbique et de ses sels et moins de 100 mg, par kg de crevettes, d'acide benzoïque et de ses sels, étant entendu que la solution aqueuse de conservation comprend un composé acétate et un composé lactate, que le rapport pondéral du composé acétate au composé lactate est supérieur à 1/1, que la solution présente un pH inférieur ou égal à 5,0, et que le composé acétate est présent dans la solution en une proportion d'au moins 1,5 % en poids.

2. Produit comprenant des crevettes grises *(Crangon crangon)* cuites et décortiquées, qui n'ont pas été soumises à l'action d'un rayonnement ionisant et qui contiennent moins de 100 mg, par kg de crevettes, d'acide sorbique et de ses sels et moins de 100 mg, par kg de crevettes, d'acide benzoïque et de ses sels, lequel produit comprend un composé acétate et un composé lactate, le rapport pondéral du composé acétate au composé lactate étant supérieur à 1/1, lequel produit présente un pH d'au moins 5,0 et lequel produit présente une durée de conservation d'au moins 3 semaines.

3. Produit conforme à la revendication 2, lequel produit contient du composé acétate et du composé lactate en une proportion totale de 0,7 à 3,0 % en poids, et/ou lequel produit présente un pH situé dans l'intervalle allant de 5,0 à 8,0, et de préférence dans l'intervalle allant de 6,0 à 6,6.

4. Produit conforme à l'une des revendications 2 et 3, dans lequel le composé lactate est un produit de réaction issu d'une réaction de fermentation.

5. Produit conforme à l'une des revendications 2 à 4, lequel produit est emballé dans un matériau d'emballage sous atmosphère modifiée, laquelle atmosphère modifiée comprend de préférence au moins 15 % en volume de CO₂, et mieux encore, au moins 35 % en volume de CO₂.

6. Procédé de conservation de crevettes grises (*Crangon crangon*) qui n'ont pas été soumises à l'action d'un rayonnement ionisant et qui contiennent moins de 100 mg, par kg de crevettes, d'acide sorbique et de ses sels et moins de 100 mg, par kg de crevettes, d'acide benzoïque et de ses sels, comportant les étapes suivantes :
- une première étape de traitement dans laquelle les crevettes non décortiquées et cuites sont traitées avec une première solution de conservation comprenant un composé acétate et un composé lactate, laquelle solution présente un pH inférieur ou égal à 5,0 et contient le composé acétate en une proportion d'au moins 1,5 % en poids, et les crevettes sont ensuite décortiquées,
- une deuxième étape de traitement dans laquelle les crevettes décortiquées sont traitées avec une deuxième solution de conservation comprenant un composé acétate et un composé lactate, laquelle solution présente un pH inférieur ou égal à 5,0 et contient le composé acétate en une proportion d'au moins 1,5 % en poids,
- et le fait d'emballer les crevettes obtenues après les avoir séparées de la deuxième solution de conservation,
et dans lequel procédé la deuxième solution de conservation ainsi que la première comprennent le composé acétate et le composé lactate en un rapport pondéral entre le composé acétate et le composé lactate supérieur à 1/1, et de préférence d'au moins 2/1.

7. Procédé conforme à la revendication 6, dans lequel le premier traitement est mené durant 1 à 10 minutes avec une première solution de conservation comprenant au moins 2,5 % en poids de composé acétate, tandis que le deuxième traitement est mené durant au moins 24 heures avec une deuxième solution de conservation comprenant moins de 2,5 % en poids de composé acétate.

8. Procédé conforme à la revendication 6 ou 7, dans lequel la deuxième étape de traitement comprend les opérations suivantes :
- immerger les crevettes décortiquées dans la deuxième solution de conservation,
- et séparer la deuxième solution de conservation d'avec les crevettes décortiquées,
étant entendu que la deuxième solution de conservation est séparée moins de 24 heures avant l'emballage des crevettes.

9. Procédé conforme à l'une des revendications 6 à 8, dans lequel les crevettes sont emballées sous atmosphère modifiée, et de préférence sous une atmosphère comprenant au moins 15 % en volume de CO₂.

10. Procédé conforme à l'une des revendications 6 à 9, comprenant les étapes suivantes :
- cuisson des crevettes,
- première étape de traitement, dans laquelle les crevettes cuites sont traitées avec une première solution de conservation comprenant le composé lactate et le composé acétate, laquelle solution présente un pH inférieur ou égal à 5,0,
- maintien des crevettes obtenues à l'issue de la première étape de traitement à une température de -3 à 6 °C durant au moins 2 jours,
- décorticage des crevettes obtenues à l'issue de l'étape précédente,
- deuxième étape de traitement, dans laquelle les crevettes décortiquées sont immergées dans la deuxième solution de conservation,
- maintien des crevettes décortiquées et immergées à une température de -3 à 6 °C durant au moins 2 jours,
- séparation de la deuxième solution de conservation d'avec les crevettes décortiquées,
- et emballage des crevettes obtenues après séparation de la deuxième solution de conservation, étant entendu que la deuxième solution de conservation est séparée moins de 24 heures avant l'emballage des crevettes.

11. Mélange comprenant des crevettes grises *(Crangon crangon)* cuites et décortiquées qui n'ont pas été soumises à l'action d'un rayonnement ionisant et une solution aqueuse de conservation, lequel mélange comprend moins de 100 mg, par kg de crevettes, d'acide sorbique et de ses sels et moins de 100 mg, par kg de crevettes, d'acide benzoïque et de ses sels, laquelle solution aqueuse de conservation comprend un composé acétate et un composé lactate, laquelle solution présente un pH inférieur ou égal à 5,0, dans lequel mélange le composé acétate se trouve présent dans la solution en une proportion d'au moins 1,5 % en poids et de préférence d'au moins 2,5 % en poids, et dans lequel mélange le rapport pondéral du composé acétate au composé lactate est supérieur à 1/1, et de préférence d'au moins 2/1.
